Europäisches Patentamt

European Patent Office

Office européen des brevets

(19)

(11) **EP 1 123 471 B1**

(12) **EUROPÄISCHE PATENTSCHRIFT**

(45) Veröffentlichungstag und Bekanntmachung des Hinweises auf die Patenterteilung:
**03.07.2002   Patentblatt 2002/27**

(51) Int Cl.7: **F16H 61/00**

(86) Internationale Anmeldenummer:
**PCT/DE99/03183**

(21) Anmeldenummer: **99971071.8**

(22) Anmeldetag: **01.10.1999**

(87) Internationale Veröffentlichungsnummer:
**WO 00/25042 (04.05.2000 Gazette 2000/18)**

(54) **VERFAHREN ZUM STEUERN UND STEUERUNG FÜR EIN STUFENLOSES AUTOMATISCHES KRAFTFAHRZEUG-GETRIEBE**

CONTROL METHOD AND SYSTEM FOR AN INFINITELY VARIABLE AUTOMATIC AUTOMOBILE TRANSMISSION

PROCEDE ET DISPOSITIF DE COMMANDE POUR UNE TRANSMISSION AUTOMATIQUE VARIABLE EN CONTINU D'AUTOMOBILE

(84) Benannte Vertragsstaaten:
**DE**

(30) Priorität: **23.10.1998   DE 19849038**

(43) Veröffentlichungstag der Anmeldung:
**16.08.2001   Patentblatt 2001/33**

(73) Patentinhaber: **SIEMENS AKTIENGESELLSCHAFT 80333 München (DE)**

(72) Erfinder:
• **HEESCHE, Kai D-81539 München (DE)**
• **GRAF, Friedrich D-93049 Regensburg (DE)**

(56) Entgegenhaltungen:
**EP-A- 0 848 191            DE-A- 19 645 975
DE-A- 19 752 623**

**Beschreibung**

Die Erfindung betrifft ein Verfahren nach Anspruch 1 und eine Steuerung nach dem Oberbegriff von Anspruch 10.

Bekannte Steuerungen für stufenlose Kraftfahrzeug-Getriebe, üblicherweise auch als CVT-Steuerungen bezeichnet, stellen den Sollarbeitspunkt des Getriebes, der einer Sollmotordrehzahl entspricht, als Funktion des Fahrpedalwerts oder des resultierenden Soll-Motordrehmoments ein. Die Steuerung enthält meistens zwei Stellkennlinien: eine, die für einen ökonomischen, d.h. kraftstoffsparenden, Betrieb und eine andere, die für einen fahrleistungsorientierten, sportlichen Betrieb des Kraftfahrzeugs ausgelegt ist. Die letztere bewirkt bei gleicher Fahrpedalstellung höhere Motordrehzahlen - entsprechend einer kleineren Übersetzung -, so daß dem Fahrer eine größere Motordrehmoment- oder Fahrpedalreserve zur Verfügung steht. Dabei muß der Fahrer das Fahrpedal bei gleicher Motorleistung nicht soweit auslenken wie bei einer Steuerung mit der Stellkennlinie für ökonomischen Betrieb.

Bei einem bekannten Verfahren zum Betrieb eines Fahrzeugs mit CVT-Getriebe (DE 43 30 391 A1) wird mit einer manuell zu bedienenden Betätigungseinrichtung die Übersetzung des Getriebes kontinuierlich verstellt, wobei die Verstellung der Übersetzung innerhalb der Grenzen einer größten und einer kleinsten Übersetzung solange durchgeführt wird, wie die manuelle Betätigung erfolgt (Tip-Betrieb).

Solchermaßen gesteuerte CVT-Getriebe sind zwar technisch sehr flexibel, setzen aber beim Fahrer die Bereitschaft zur Umstellung voraus. Ein kontinuierliches Verstellen der Getriebeübersetzung trägt einerseits dazu bei, den Motor in dem verbrauchsgünstigsten Betriebsbereich zu halten, andererseits ist ein Konstanthalten der Motordrehzahl für den Fahrer sehr ungewohnt, ein Verhalten, das auch als "Motorrollereffekt" bekannt ist. Viele Fahrer würden eher das gewohnte akustische Verhalten eines Kraftfahrzeugs mit einem Stufengetriebe bevorzugen, vor allem die bei diesem spürbare Kopplung der Motordrehzahl mit der Fahrgeschwindigkeit. Dies gilt insbesondere für sportlich veranlagte Fahrer.

Bei einem gattungsgemäßen Verfahren zum Steuern eines stufenlosen automatischen Kraftfahrzeuggetriebes kann die Übersetzung bei Bedarf durch einen manuellen Eingriff des Fahrers verändert werden (EP 0 848 191 A1). In manuellen Modus wird die Getriebeübersetzung dabei entlang vorgegebener Solltrajektorien gesteuert, um größere Drehzahlsprünge zu vermeiden.

Der stufenlose Betrieb eines CVT-Getriebes entkoppelt den gewohnten Zusammenhang von Drehzahländerung des Motors und Beschleunigung des Fahrzeugs. Da dieser Zusammenhang den Fahrspaß des Fahrers beeinflußt, erscheint es sinnvoll, diesen Zusammenhang auch bei einem CVT-Getriebe herzustellen, ohne dessen Hauptvorteil, die freie Wahl des Betriebspunkts, aufzugeben.

Eine bekannte elektronische Steuerung eines CVT-Getriebes reproduziert das Verhalten eines Sechsgang-Stufengetriebes, in dessen Steuerung der Fahrer manuell durch Eingeben von Schaltbefehlen eingreifen kann, und erzeugt damit Fahrspaß (SAE-Paper 9636321 Keiji SATO et al., Development of electronically controlled CVT system equipped with CVTip, SAE conference CVT'96, Yokohama). Ein Verhalten wie bei einem Stufengetriebe wird mit mehreren diskreten Gangstufen reproduziert, die über Schaltkennlinien und -felder gesteuert werden. Der Nachteil einer solchen Lösung ist ein hoher Anpassungsaufwand, da die Schaltkennlinien und -felder mit sehr vielen einzelnen Punkten definiert sind, die äußerst aufwendig an unterschiedliche Fahrzeug- und Motorvarianten angepaßt werden müssen.

Der Erfindung liegt das technische Problem zugrunde, ein Verfahren und eine Steuerung der eingangs genannten Art zu schaffen, mit der die für den Fahrer gewohnte Kopplung zwischen Motordrehzahl und Fahrgeschwindigkeit bei einem Kraftfahrzeug mit CVT Getriebe hergestellt wird, ohne das starre Schema eines Stufengetriebes abzubilden. Dies soll insbesondere unter Berücksichtigung des genannten Sollarbeitspunktes erreicht werden.

Diese Aufgabe wird erfindungsgemäß durch das Verfahren nach Anspruch 1 und durch die Steuerung nach Anspruch 10 gelöst. Vorteilhafte Weiterbildungen der Erfindung sind in den Unteransprüchen niedergelegt.

Ein Ausführungsbeispiel der Erfindung wird im folgenden anhand der Zeichnung erläutert. Es zeigen:

Figur 1    ein Blockschaltbild einer erfindungsgemäßen Getriebesteuerung;
Figur 2    eine Schaltungsanordnung zum Berechnen eines Übersetzungssollwerts;
Figur 3    die Fahrzeuggeschwindigkeit in Abhängigkeit der Motordrehzahl bei einer erfindungsgemäßen Getriebesteuerung;
Figur 4    eine Diagrammdarstellung eines in der Getriebesteuerung gemäß Figur 1 verwendeten Motordrehzahlsprungs;
Figur 5    ein Diagramm zur Erläuterung eines manuellen Eingriffs des Fahrers in die Getriebesteuerung, und
Figur 6    ein Kennfeld des CVT-Getriebes bei direkter Steuerung der Drosselklappe des Kraftfahrzeugs durch den Fahrer.

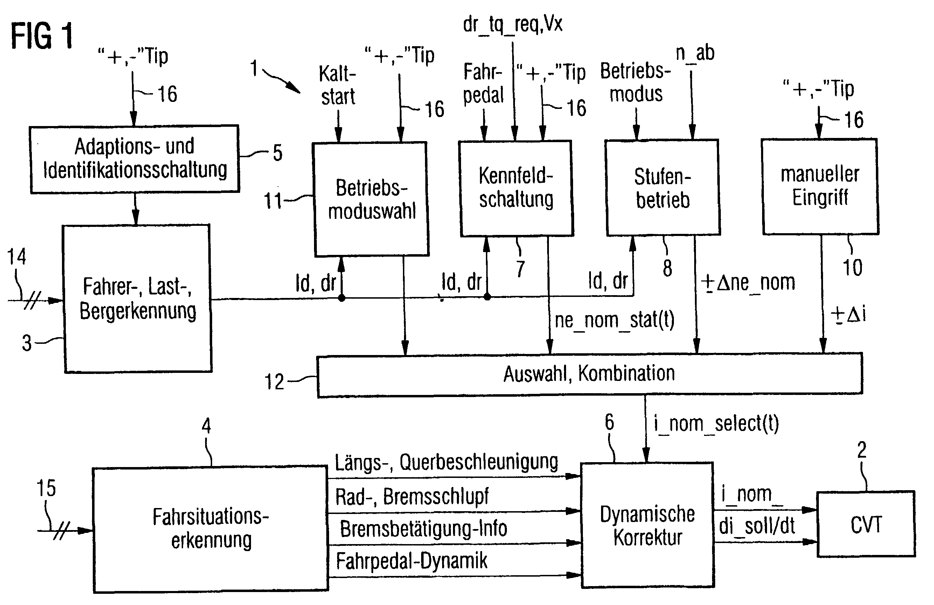

Die Struktur einer erfindungsgemäßen Steuerung 1 eines automatischen CVT-Getriebes 2, im folgenden als Getriebesteuerung 1 bezeichnet, ist aus dem Blockschaltbild von Figur 1 ersichtlich. Sie enthält eine Anzahl nachfolgend beschriebener Schaltungsbestandteile, die auch als Programmblöcke realisiert sein können, und die im folgenden vereinfachend jeweils als "Block" bezeichnet werden. Bei den einzelnen Blöcken sind in Klammern die - weitgehend englischsprachigen - Bezeichnungen angegeben, die für Programmbeschreibungen benutzt werden.

Die Getriebesteuerung 1 enthält erste Fuzzy-Systeme 3, die eine Fahrer- und eine Last- oder Bergerkennung durchführen (driver, load, road), ein zweites Fuzzy-System 4, das eine Fahrsituationserkennung (driving situation detection) durchführt, eine Adaptions- und Identifikationsschaltung 5 (Online Adaption), einen Block 6 zur Kurzzeitbeeinflussung bei einigen kurzfristig auftretenden Situationen (dynamic corrections), und eine Stellkennlinien enthaltende oder erzeugende Kennfeldschaltung 7, (static eng. speed setpoint lines) . Des weiteren enthält die Getriebesteuerung einen Block 8 (stepped mode (automatic)), der die Motordrehzahl mit der Fahrgeschwindigkeit koppelt und damit einen Stufenbetrieb realisiert, einen Block 10 (Tip function (manual)), der direkte manuelle Eingriffe des Fahrers umsetzt.

Ein Block 11, der eine Betriebsmoduswahl (driving mode selection) durchführt, entscheidet über die Betriebsart der Getriebesteuerung zusammen mit einem Block 12 (selection, combination), der Verknüpfungen zwischen den Blocks 7, 8 und 10 herstellt. Einzelheiten hierzu, zum Beispiel wie der manuelle Modus der Getriebesteuerung erkannt wird und die Rückkehr in den automatischen Modus erfolgt, sind in der älteren Anmeldung DE 197 36 406.3 (unser Zeichen GR 97 P 2190) dargestellt. Der Block 5 (Online Adaption) ist in der älteren Anmeldung DE 197 52 623.3 (unser Zeichen GR 97 P 2969) erläutert.

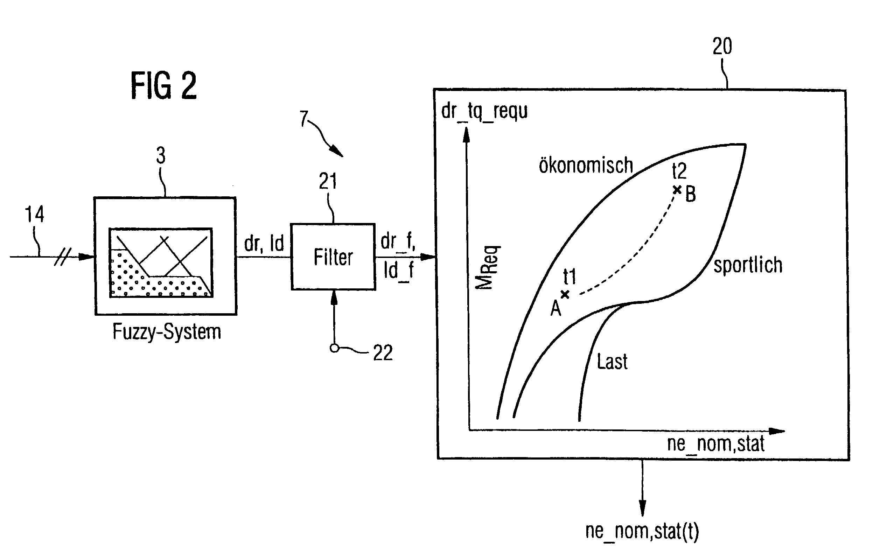

Über Mehrfachsignalleitungen oder Datenbusse 14 und 15 werden den Fuzzy-Systemen 3 und 4 die Signale von mehreren hier nicht dargestellten Sensoren zugeführt (siehe auch Figur 2). Über eine Signalleitung 16 gelangen zu den Blöcken 5, 11, 7, 16, 8 und 10 manuell eingegeben Befehle des Fahrers: ein Tip "+" zum Hochschalten, d.h. zum Erhöhen der Übersetzung, und ein Tip "-" zum Rückschalten oder Verkleinern der Übersetzung. Die zwischen den einzelnen Blöcken von Figur 1 ausgetauschten Befehle werden weiter hinten erläutert.

Die bislang vereinfacht dargestellte Kennfeldschaltung 7 enthält eine Kennfeld-Überlagerungsschaltung 20 (Figur 2), der das Ausgangssignal des Fuzzy-Systems 3 zugeführt wird, das Fahrer- und Lastfaktoren dr, ld enthält (eine Liste der hier benutzten Formelzeichen ist am Ende dieser Beschreibung angefügt). Der Aufbau des Fuzzy-Systems 3, die von ihm ausgewerteten Sensorsignale und das erzeugte Ausgangssignal sind in der Anmeldung EP 0 576 703 A1 beschrieben. Das Ausgangssignal bewirkt nach einer Filterung in einem Filter 21, in dem über eine Leitung 22 signalisierte besondere Betriebsbedingungen berücksichtigt werden können, in der Überlagerungsschaltung 20 (static eng. speed setpoint lines) eine Überlagerung von Kennfelddaten, die in mehreren Kennfeldern abgelegt sind. Die Art der Überlagerung wird zum Beispiel wie in der oben genannten älteren Anmeldung DE 197 52 623.3 beschrieben durchgeführt.

Die Getriebesteuerung 1 paßt ihr Schaltverhalten kontinuierlich an das Fahrverhalten des Fahrers und an die Belastungssituation des Fahrzeugs an, indem sie mit der von dem Fuzzy-System 3 berechneten Werte für das Fahrerverhalten dr und den Belastungszustand ld in der Überlagerungsschaltung 20 durch eine Interpolation zwischen verschiedenen Kennfeldern eine Sollmotordrehzahl ne_nom_stat(t) oder eine korrespondierende Übersetzung, d.h. einen sozusagen virtuellen Gang auswählt.

Ist der Fahrer mit dem Schaltverhalten des Fahrzeugs nicht einverstanden, so hat er wie erwähnt die Möglichkeit, über eine '-'-Taste 16 eines Eingabeorgans durch den Block 10 (siehe Figur 1) einen Gang zurückzuschalten und über eine '+'-Taste 16 einen virtuellen Gang hochzuschalten (‚tip function (manual)').

Der Block 8, der den gestuften Modus der Getriebesteuerung 1 steuert, soll nun näher beschrieben werden. Durch die Blöcke 7, 8, 11 und 12 wird eine eingestellte oder einzustellende Sollgetriebeübersetzung i_nom_select festgelegt und vorgegeben, zum Beispiel mit den Bedingungen "kein Kaltstartbetrieb" oder "manuelle Eingriffe".

Hierzu wird eine aus der Überlagerungsschaltung 20 in Block 7 gelieferte Sollmotordrehzahl im statischen Arbeitspunkt ne_nom_stat(t) oder die daraus resultierende Getriebeübersetzung im statischen Arbeitspunkt modifiziert. Bei positiver Beschleunigung des Fahrzeugs wird diese Solldrehzahl ne_nom_stat(t) aus dem Block 7 durch einen additiven Term $\Delta$ne_nom modifiziert, wodurch sich eine modifizierte untere Motordrehzahl ne_nom_min mit ergibt

$$\text{ne\_nom\_min} = \text{ne\_nom\_stat(t)} - \Delta\text{ne\_nom} \tag{1}$$

bezogen auf die aktuelle Getriebeübersetzung i_nom_select(t1) für die Sollgetriebeübersetzung i_nom_select(t2).

Vorausgesetzt die Getriebeübersetzung ist i= n_ein/n_aus, ergibt sich:

$$\text{i\_nom\_select(t2)} = \text{i\_nom\_stat(t2)} - \Delta\text{I(t2)} = \text{i\_nom\_stat(t2)} - \Delta\text{ne\_nom/n\_aus} \tag{2}$$

Dabei steht die Getriebeausgangsdrehzahl n_aus im allgemeinen als Meßgröße zur Verfügung. Falls nicht, so läßt sich unter den Annahmen

$$n\_aus = ne\_nom\_select(t1)/i\_nom\_select(t1) \tag{2a}$$

und

$$i\_nom\_select(t1)=i\_ist = i\_nom\_stat(t2) \tag{2b}$$

die Gleichung (2) vereinfachen, da zu einem Zeitpunkt t1 $\Delta i = 0$ gilt:

$$i\_nom\_select(t2)=i\_ist*(1 - \Delta ne\_nom / ne\_nom\_select(t1)) \tag{2c}$$

Es wird demnach angenommen, daß i_nom_stat konstant bleibt, d.h. die Fahreranforderung unverändert bleibt.

Im nachfolgenden Beschleunigungsvorgang beschleunigt das Fahrzeug bei fester Getriebeübersetzung i, solange bis eine obere Sollmotordrehzahl ne_nom_max

$$ne\_nom\_max = ne\_nom\_stat(t) + \Delta ne\_nom \tag{3}$$

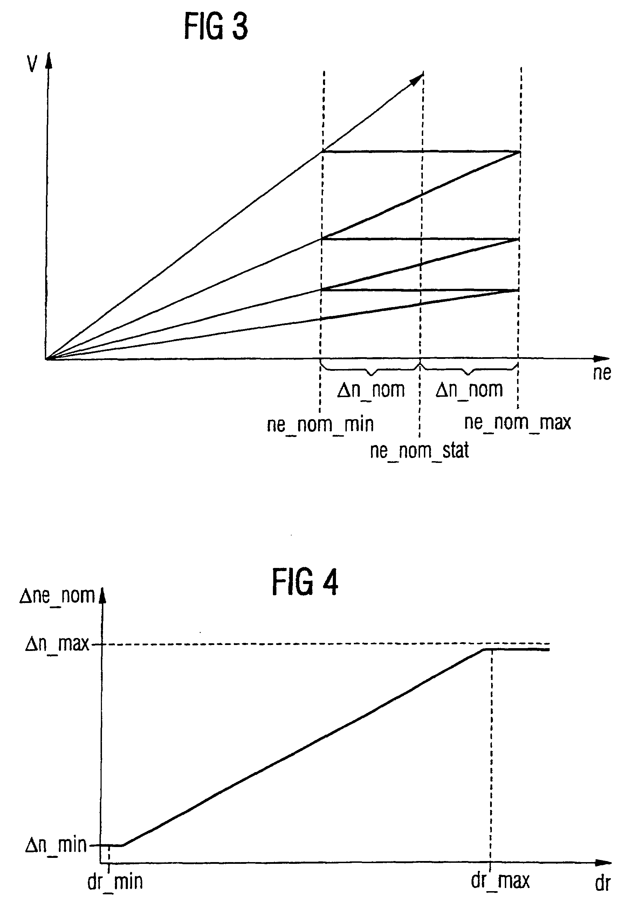

erreicht wird. Nach Erreichen dieser Drehzahl ne_nom_max wird die Getriebeübersetzung i nach Gleichung (2) oder (2c) verstellt, so dass wieder die untere Sollmotordrehzahl ne_nom_min erreicht wird. Aus Figur 3 ist ein Beispiel für den Verlauf der Motordrehzahl ne und der Geschwindigkeit v des Kraftfahrzeugs bei einem Beschleunigungvorgang mit einem konstanten Motordrehzahlsprung $\Delta ne\_nom$ und einer Sollmotordrehzahl im statischen Arbeitspunkt ne_nom_stat(t) ersichtlich, die den automatisch gestuften Arbeitsmodus der Getriebesteuerung 1 deutlich werden lässt.

Die Abweichung $\Delta ne\_nom$ vom Sollarbeitspunkt ne_nom_stat(t) kann allgemein bestimmt werden als frei wählbare Funktion beispielsweise von der Fahrzeuggeschwindigkeit v, der Fahrerbewertung dr und der Lastbewertung ld:

$$\Delta ne\_nom = f(v, dr, ld) \tag{4}$$

Dabei steigt in dem aus Figur 4 ersichtlichen Beispiel die Abweichung $\Delta ne\_nom$ zwischen einem minimalen Wert $\Delta n\_min$, der einem minimalen Fahrerwert dr_min entspricht, und einem Maximalwert $\Delta n\_max$, der einem maximalen Fahrerwert dr_max entspricht, linear an. Hierbei entspricht $\Delta n\_min$ einer minimalen Stufigkeit und $\Delta n\_max$ einer maximalen Stufigkeit, die durch die angestrebte Anzahl von virtuellen Gängen der Getriebesteuerung 1 bestimmt wird.

Zusätzlich kann die Stufigkeit $\Delta ne\_nom$ beim Betrieb des Getriebes in dem manuellen Modus der Getriebesteuerung als Übersetzungssprung bei einem manuellen Fahrereingriff eingesetzt werden. Der Vorteil dieses Merkmals liegt darin, daß der aktuelle Arbeitspunkt berücksichtigt wird und nicht auf eine starre Übersetzungstabelle zugegriffen werden muss.

Wird die +/- Taste 16 oder der nicht dargestellte Wählhebel des Getriebes 2 nur kurz getippt, so erfolgt eine Verstellung der Getriebeübersetzung nur um einen konstanten Wert (Gangsprung). Dieser manuelle Eingriff wird durch den Block 16 erkannt, der Block 12 berechnet die Sollgetriebeübersetzung i_nom_select(I):

$$i\_nom\_select(t)= i\_nom\_stat(t) +/- \Delta i \tag{5}$$

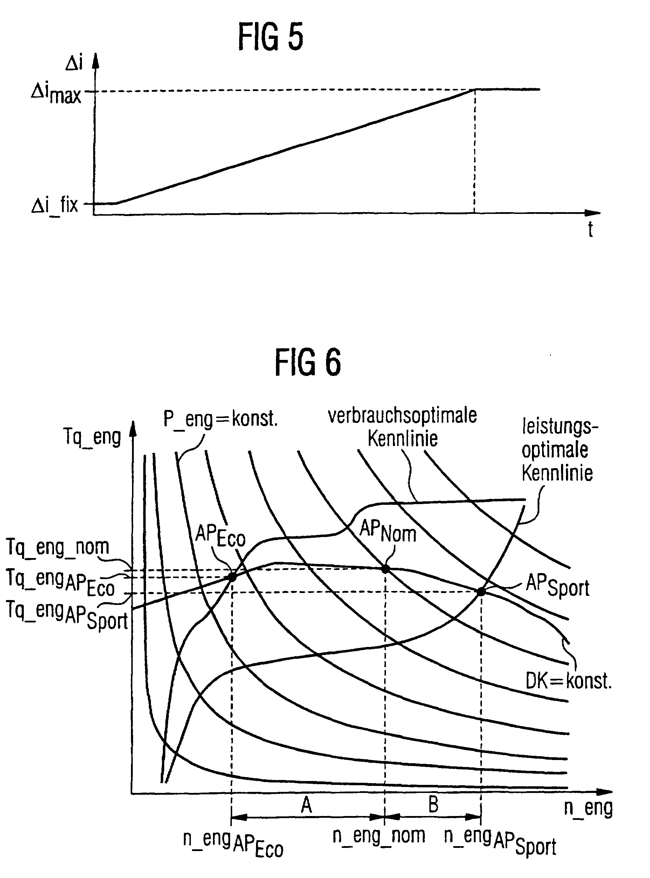

Bei anhaltender Betätigung der Taste 16 oder des Wählhebels erfolgt ein kontinuierlicher Eingriff $\Delta i$ auf die Getriebeübersetzung i (Figur 5):

$$i\_nom\_select(t)=i\_nom\_stat(t) +/- \Delta i(t) \tag{6}$$

In Figur 5 ist dabei nur der Betrag von $\Delta i$ aufgeführt, das Vorzeichen hängt davon ab, ob der Fahrer eine Hoch- oder eine Rückschaltung, oder eine entsprechende Verstellung der Übersetzung, vorgegeben hat.

Die vorstehend beschriebenen Eingriffe beziehen sich, wie bereits erwähnt, auf den von der Getriebesteuerung berechneten Übersetzungssollwert i_nom_stat. Dazu wird das in der o.g. älteren Anmeldung DE 197 52 623.3 bekannte Verfahren zur Interpolation zwischen Schaltkennfeldern durchgeführt, wobei lediglich die Schaltkennlinien (für Stufengetriebe) durch Stellkennlinien (für stufenlose Getriebe) ersetzt werden. Die Kennfeld-Überlagerungsschaltung 20 (siehe Figur 2) zeigt eine beispielhafte Ausführung mit einer ökonomischen Kennlinie "eco-line", einer sportlichen Kennlinie "perfo-line" und einer Last-Kennlinie "load-line".

Das Verfahren zur Einbeziehung einer Fahrer- bzw. Lastbewertung hängt dabei von der Auslegung der Motorsteuerung ab. Anhand von Figur 6 wird ein Verfahren erläutert, bei dem der Fahrer die Drosselklappe DK, und damit das Motormoment, direkt steuert. Die Berechnung der Sollmotordrehzahl n_eng_nom (analog zu ne_nom_stat anhand von Figur 2) für einen Fahrerwert dr mit

$$dr = A/(A+B) \tag{7}$$

erfolgt über die Interpolation zwischen der Sollmotordrehzahl $n\_eng_{APEco}$ für den verbrauchsoptimalen Arbeitspunkt $AP_{Eco}$ und der Sollmotordrehzahl $n\_eng_{APSport}$ für den leistungsorientierten Arbeitspunkt $AP_{Sport}$.

Zusätzlich zu der oben beschriebenen Fahrerbewertung kann eine Bewertung des Lastzustandes ld erfolgen, wobei analog vorzugehen ist und dabei die Arbeitspunkte $AP_{ECO}$ und $AP_{Sport}$ durch $AP_{Nom}$ und $AP_{Last}$ zu ersetzen sind. Als Resultat ergibt sich ein Lastarbeitspunkt $AP_{Ld}$.

**Formelzeichen:**

| | |
|---|---|
| ne | Motordrehzahl |
| ne_nom | Sollmotordrehzahl |
| ne_nom_min | um -Δne_nom modifizierte untere Sollmotordrehzahl |
| ne_nom_max | um -Δne_nom modifizierte obere Sollmotordrehzahl |
| ne_nom_stat | Sollmotordrehzahl im statischen Arbeitspunkt |
| ne_nom_select | eingestellte Sollmotordrehzahl |

| | |
|---|---|
| Δi | Änderung der Getriebeübersetzung durch manuellen Eingriff |
| Δne_nom | Motordrehzahlsprung für gestuften Mode |
| Δn_min | minimaler Motordrehzahlsprung |
| Δn_max | maximaler Motordrehzahlsprung |

| | |
|---|---|
| i_nom_stat | Sollgetriebeübersetzung im Arbeitspunkt |
| i_nom_select | eingestellte Sollgetriebeübersetzung |
| i_ist | eingestellte Getriebeübersetzung |

| | |
|---|---|
| n_ein | Getriebeeingangsdrehzahl |
| n_aus | Getriebeausgangs-/-abtriebsdrehzahl |

| | |
|---|---|
| FP,tv | Fahrpedal/Drosselklappe |
| v | Geschwindigkeit |
| dr | Fahrerbewertung (ökonomisch/sportlich) |
| ld | Lastbewertung (Beladung / Straßenneigung) |
| dr_f | gefilterte Fahrerbewertung |
| ld_f | gefilterte Lastbewertung |

| | |
|---|---|
| tq_eng | Motormoment |
| tq_eng_nom | Sollmotormoment |
| tq_eng_stat | Motormoment im statischen Arbeitspunkt |
| tq_eng_req | Angefordertes Motormoment |
| P_eng | Motorleistung |
| P_eng_req | Angeforderte Motorleistung |
| n_eng | Motordrehzahl |
| n_eng_nom | Sollmotordrehzahl |

| | |
|---|---|
| $n\_eng_{APEco}$ | Sollmotordrehzahl im ökonomoschen Arbeitspunkt |
| $n\_eng_{APSport}$ | Sollmotordrehzahl im sportlichen Arbeitspunkt |
| $AP_{Eco}$ | ökonomoischer Arbeitspunkt |
| $AP_{Sport}$ | sportlicher Arbeitspunkt |
| $tq\_eng_{APEco}$ | Motormoment im ökonomoschen Arbeitspunkt |
| $tq\_eng_{APSport}$ | Motormoment im sportlichen Arbeitspunkt |

| | |
|---|---|
| k | Korrekturfaktor für Motormoment |
| F_man | Abklingfaktor für Korrektur im manuellen Modus |
| F_auto | Abklingfaktor für Korrektur im Automatikmodus |

| | |
|---|---|
| dr_tq_req | Vom Fahrer angefordertes Moment |
| n_ab | Getriebeabtriebsdrehzahl |

| | |
|---|---|
| $M_{Req}$ | Angefordertes Moment |

**Patentansprüche**

**1.** Verfahren zum Steuern eines stufenlosen automatischen Kraftfahrzeug-Getriebes,

- bei dem die Übersetzung des Getriebes (i_ist) in Abhängigkeit von einer die Motorleistung charakterisierenden Größe (FP, tv) und einer die Fahrzeuggeschwindigkeit charakterisierenden Größe (v) anhand von abgespeicherten Stellkennlinien automatisch eingestellt wird, und
- bei dem die Übersetzung durch einen manuellen Eingriff des Fahrers bei Bedarf verändert wird,

**dadurch gekennzeichnet, dass** die Übersetzung des Getriebes als gestufte Abweichung von einer Sollmotordrehzahl (n_eng) eingestellt wird.

**2.** Verfahren nach Anspruch 1, **dadurch gekennzeichnet, dass** die Abweichung bei positiver Beschleunigung als Term (△ne_nom) von einer Sollmotordrehzahl im statischen Arbeitspunkt abgezogen wird und dabei eine untere Motordrehzahl ergibt.

**3.** Verfahren nach Anspruch 2, **dadurch gekennzeichnet, daß** bei einem nachfolgenden Beschleunigungsvorgang das Kraftfahrzeug bei fester Getriebeübersetzung i solange beschleunigt wird, bis eine obere Sollmotordrehzahl erreicht wird, die um die Abweichung über der Sollmotordrehzahl im statischen Arbeitspunkt liegt.

**4.** Verfahren nach einem der vorhergehenden Ansprüche, **dadurch gekennzeichnet, dass** die Abweichung (△ne_nom) eine Funktion der Fahrzeuggeschwindigkeit ist.

**5.** Verfahren nach einem der vorhergehenden Ansprüche, **dadurch gekennzeichnet, dass** die Abweichung (△ne_nom) eine Funktion einer durch ein Fuzzy-System erzeugten Fahrerbewertung (dr) ist.

**6.** Verfahren nach einem der vorhergehenden Ansprüche, **dadurch gekennzeichnet, dass** die Abweichung (△ne_nom) eine Funktion einer durch ein Fuzzy-System erzeugten Lastbewertung (ld) des Fahrzeugs ist.

**7.** Verfahren nach einem der vorhergehenden Ansprüche, **dadurch gekennzeichnet, dass** die Abweichung (△ne_nom) von einem minimalen Wert (△n_min) bis zu einem maximalen Wert (△n_max) linear ansteigt.

**8.** Verfahren nach einem der vorhergehenden Ansprüche, **dadurch gekennzeichnet, dass** die Abweichung (△ne_nom) in einem manuellen Modus der Getriebesteuerung als Übersetzungssprung verwendet wird.

**9.** Verfahren nach einem der vorhergehenden Ansprüche, **dadurch gekennzeichnet, dass** bei positiver Beschleunigung des Kraftfahrzeugs die Änderung der Motordrehzahl (ne) an die Beschleunigung des Kraftfahrzeugs angepaßt wird.

**10.** Steuerung für ein stufenloses automatisches Kraftfahrzeug-Getriebe,

- die gespeicherte Stellkennlinien enthält, anhand von welchen die Übersetzung (i_ist) des Getriebes in Abhängigkeit von der Fahrpedalstellung (FP) und von der Fahrzeuggeschwindigkeit automatisch eingestellt wird,
- die eine Bedienungseinrichtung aufweist, mit der die Übersetzung (i_ist) des Getriebes durch einen manuellen Eingriff des Fahrers bei Bedarf verändert wird, **dadurch gekennzeichnet,**
- **dass** sie einen Schaltungsblock (8) enthält, durch den die Übersetzung des Getriebes als gestufte Abweichung (△ne_nom) von einer Sollmotordrehzahl (ne_nom_stat) eingestellt wird.

**Claims**

1. Method for controlling an infinitely variable automatic motor vehicle speed transmission,

   - in which the transmission ratio of the speed transmission (i_act) is set automatically using stored adjustment characteristic curves as a function of a variable (FP, tv) which characterizes the engine output, and a variable (v) which characterizes the vehicle speed, and
   - in which the transmission ratio is varied as required by means of a manual intervention by the driver,
   - **characterized in that** the transmission ratio of the speed transmission is set as a stepped deviation from a setpoint engine speed (n_eng).

2. Method according to Claim 1, **characterized in that** the deviation is subtracted in the case of a positive acceleration as a term (△ne_nom) from a setpoint engine speed at the static operating point, and a lower engine speed is obtained in the process.

3. Method according to Claim 2, **characterized in that**, during a subsequent acceleration procedure, the motor vehicle is accelerated with a fixed transmission ratio i until an upper setpoint engine speed is reached which lies above the setpoint engine speed at the static operating point by an amount equal to the deviation.

4. Method according to one of the preceding claims, **characterized in that** the deviation (△ne_nom) is a function of the vehicle speed.

5. Method according to one of the preceding claims, **characterized in that** the deviation (△ne_nom) is a function of a driver evaluation (dr) generated by a fuzzy system.

6. Method according to one of the preceding claims, **characterized in that** the deviation (△ne_nom) is a function of a load evaluation (ld) of the vehicle generated by a fuzzy system.

7. Method according to one of the preceding claims, **characterized in that** the deviation (△ne_nom) rises from a minimum value (△n_min) to a maximum value (△n_max).

8. Method according to one of the preceding claims, **characterized in that** the deviation (△ne_nom) is used as a transmission jump in a manual mode of the speed transmission control system.

9. Method according to one of the preceding claims, **characterized in that**, given positive acceleration of the motor vehicle, the change in the engine speed (ne) is adapted to the acceleration of the motor vehicle.

10. Control system for an infinitely variable automatic motor vehicle speed transmission,

    - which contains stored adjustment characteristic curves, by means of which the transmission ratio (i_act) of the speed transmission is set automatically as a function of the accelerator pedal position (FP) and of the vehicle speed,
    - which has a control device with which the transmission ratio (i_act) of the speed transmission is varied as required by means of a manual intervention by the driver,

    **characterized**

    - **in that** it contains a circuit block (8) by means of which the transmission ratio of the speed transmission is set as a stepped deviation (△ne_nom) from a setpoint engine speed (ne_nom_stat).

**EP 1 123 471 B1**

**Revendications**

1. Procédé de commande d'une boîte de vitesses automatique à variation continue pour véhicule automobile,

   - dans lequel le rapport de transmission de la boîte de vitesses (i_ist) est réglé automatiquement en fonction d'une grandeur (fp, tv ) qui caractérise la puissance du moteur et d'une grandeur (v) qui caractérise la vitesse du véhicule, en se reportant à des caractéristiques de réglage mémorisées, et
   - dans lequel le rapport de transmission est modifié au besoin par une intervention manuelle du conducteur,

   **caractérisé en ce que** le rapport de transmission de la boîte de vitesses est réglé sous la forme d'une modification échelonnée d'une vitesse de rotation de consigne du moteur (n_eng).

2. Procédé selon la revendication 1, **caractérisé en ce que** l'écart, dans le cas d'une accélération positive, est tiré comme terme ($\Delta$ne_nom) d'une vitesse de rotation de consigne du moteur au point de travail statique et donne dans ce cas une vitesse de rotation inférieure du moteur.

3. Procédé selon la revendication 2, **caractérisé en ce qu'**en présence d'un processus d'accélération consécutif du véhicule automobile alors que le rapport de transmission i de la boîte de vitesses est fixe, on accélère jusqu'à ce qu'on atteigne une vitesse de rotation de consigne supérieure qui est supérieure, d'une valeur égale à l'écart, à la vitesse de rotation de consigne du moteur au point de travail statique.

4. Procédé selon une des revendications précédentes, **caractérisé en ce que** l'écart ($\Delta$n_nom) est une fonction de la vitesse du véhicule.

5. Procédé selon une des revendications précédentes, **caractérisé en ce que** l'écart ($\Delta$ne_nom) est une fonction d'une évaluation du conducteur (dr) produites par un système à logique floue.

6. Procédé selon une des revendications précédentes, **caractérisé en ce que** l'écart ($\Delta$ne_nom) est une fonction d'une évaluation de charge (ld) du véhicule produite par un système à logique floue.

7. Procédé selon une des revendications précédentes, **caractérisé en ce que** l'écart ($\Delta$n_nom) croît linéairement depuis une valeur minimale ($\Delta$n_min) jusqu'à une valeur maximale ($\Delta$n_max).

8. Procédé selon l'une des revendications précédentes, **caractérisé en ce que** l'écart ($\Delta$ne_nom ) est utilisé dans un mode manuel de la commande de la boîte de vitesses en tant que saut de rapport de transmission.

9. Procédé selon l'une des revendications précédentes, **caractérisé en ce qu'**en présence d'une accélération positive du véhicule automobile, la modification de la vitesse de rotation du moteur (ne) est adaptée à l'accélération du véhicule automobile.

10. Commande pour une boîte de vitesses automatique à variation continue pour véhicules automobiles,

    - qui comprend des caractéristiques de réglage mémorisées, sur la base desquelles le rapport de transmission i_ist de la boîte de vitesses est réglé automatiquement en fonction de la position de la pédale d'accélérateur (fp) et de la vitesse du véhicule,
    - qui présente un dispositif de manoeuvre avec lequel le rapport de transmission (i_ist) de la boîte de vitesses est modifié au besoin par une intervention manuelle du conducteur, **caractérisé**
    - **en ce qu'**elle comprend un bloc de commande (8) par lequel le rapport de transmission de la boîte de vitesses est réglé sous la forme d'un écart échelonné ($\Delta$ne_nom) d'une vitesse de rotation de consigne du moteur (ne_nom_stat)

FIG 1

FIG 2

# FIG 3

V

Δn_nom   Δn_nom

ne_nom_min

ne_nom_stat

ne_nom_max

ne

# FIG 4

Δne_nom

Δn_max

Δn_min

dr_min

dr_max

dr

# FIG 5

# FIG 6